# EUROPEAN PATENT APPLICATION

(11) **EP 2 629 399 A1**
(43) Date of publication of application: **21.08.2013**
(21) Application number: 11832636.2
(22) Date of filing: 14.10.2011
(51) Int. Cl.: H02J 13/00

(54) **MANAGEMENT SYSTEM AND SYSTEM CONTROLLER**

(30) Priority: 15.10.2010 JP 2010233110
(71) Applicant: Sanyo Electric Co., Ltd., Osaka 570-8677 (JP)
(72) Inventor: YAMADA, Ken, Moriguchi-shi Osaka 570-8677 (JP); SUGATA, Takuji, Moriguchi-shi Osaka 570-8677 (JP)
(74) Representative: Metzler, Volker
(86) International application number: PCT/JP2011/073721
(87) International publication number: WO 2012/050209

(57) **Abstract**

A management system (28) comprises a plurality of power management units (32, 36, 38, 40, 42) which divide power information of an overall facility group into a plurality of management areas and manage the respective power information in a distributed manner; and a system controller (30) which is respectively connected to the power management units (32, 36, 38, 40, 42) with connection elements and which executes power management of the overall facility group. When the update time of the power information which is transmitted to the system controller (30) has not been updated beyond a predetermined confirmation interval, occurrence of a communication abnormality is judged and an abnormality signal is output, and if the power information includes failure information while there is no communication abnormality, an alert signal is output.

## Description

### TECHNICAL FIELD

The present invention relates to a management system which manages power, and in particular to a management system and a system controller which can manage failure information or the like included in power information.

### BACKGROUND ART

A power management system is a system which executes power management which is efficient as a whole, through transmission or the like of power information between distributively placed facilities or pieces of equipment and a main control device.

For example, Patent Document 1 discloses a communication abnormality detection method for digital control devices when sequential calculations are to be executed for data of a plant among a plurality of digital control devices connected via a network. Patent Document 1 discloses, as a prior art, that data received from another digital control device is checked, a monitoring counter is incremented if the data are not updated, the monitoring counter is reset if the data are updated, and, when the value of the monitoring counter exceeds a threshold value, a communication abnormality is detected.

### [Related Art References]

### [Patent Document]

[Patent Document 1] JP 2009-32066 A

### DISCLOSURE OF INVENTION

### [Technical Problem]

When failure information is included in the power information transmitted from a facility or a piece of equipment to the main control device, the main control device may detect the failure information and may output, for example, an alert signal. However, when abnormality occurs in the communication route between the main control device and the facility or equipment, the power information is not normally transmitted, and, consequently, the failure information cannot be detected. Detection of such failure information requires that there be no communication abnormality. Therefore, it is necessary to detect the communication abnormality separately from the detection of the failure information.

An advantage of the present invention lies in provision of a management system which can detect the communication abnormality and failure status without providing a special, communication abnormality detection unit.

### [Solution to Problem]

According to one aspect of the present invention, there is provided a management system comprising a plurality of power management units which divide power information of a facility group including a plurality of facilities into a plurality of management areas and manage the management areas, and a system controller which is connected to the plurality of power management units by a communication element, which acquires the power information for each of the management areas, and which manages overall power information of the facility group based on the acquired power information, wherein the system controller comprises an abnormality signal outputting unit which outputs an abnormality signal when it is judged that communication with the power management unit is abnormal according to a predetermined communication abnormality judgment standard with regard to the power information, and an alert signal outputting unit which outputs an alert signal when the power information includes failure information in the management area of the power management unit.

According to another aspect of the present invention, there is provided a system controller which executes power management of a facility group including a plurality of facilities, comprising a receiving unit which periodically receives, from a power management unit which manages power information of the facility, the power information which is output from the power management unit, an update monitoring unit which monitors an update state of the power information received by the receiving unit, and a communication judging unit which judges a communication status with the power management unit based on the update state of the power information received by the receiving unit, wherein the communication judging unit judges that the communication status with the power management unit is abnormal when the update monitoring unit confirms that the power information received by the receiving unit is not updated.

### [Advantageous Effects of Invention]

According to the above-described structure, the management system judges whether or not there is a communication abnormality, according to a predetermined communication abnormality judgment standard with regard to the power information acquired from the power management unit, and outputs an alert signal when the same power information includes the failure information. Therefore, the communication abnormality and the failure state can be detected without providing a special communication abnormality detection unit.

The system controller judges the communication status based on the update state of the power information from the power management unit. Thus, the communication abnormality can be judged separately from the failure state.

### BRIEF DESCRIPTION OF DRAWINGS

FIG. 1 is a diagram showing an example of a facility group to which a management system according to a preferred embodiment of the present invention is applied.
FIG. 2 is a diagram for explaining flows of power information and an instruction in a management system according to a preferred embodiment of the present invention.
FIG. 3 is a diagram showing a communication system in a management system according to a preferred embodiment of the present invention.
FIG. 4 is a diagram for explaining a display screen showing a management status of an alert signal and an abnormality signal on a display unit of a management system according to a preferred embodiment of the present invention.

### BEST MODE FOR CARRYING OUT THE INVENTION

A preferred embodiment of the present invention will now be described in detail with reference to the drawings. In the following description, a storage batter is described as a lithium ion battery, but alternatively, other secondary batteries may instead be used. For example, the storage battery may be a nickel-metal hydride battery, a nickel-cadmium battery, or the like. In order to obtain power needed by a load, the electricity storage device is formed by combining a plurality of storage batteries. Therefore, the number of storage batteries forming the electricity storage device can be suitably set according to the specification of a management system which manages power.

In addition, in the following description, an electric supply is described as an external commercial power supply and a photovoltaic module which executes generation of power from solar light, but alternatively, other electric power supplies such as, for example, a wind generator may be used. Moreover, the number, power, or the like described below are merely exemplary for the purpose of explanation, and may be suitably changed according to the power specification of the management system or the like.

Moreover, in the following description, identical reference numerals are assigned to similar elements throughout the drawings, and descriptions are not repeated. In addition, in the description of this text, reference numerals which have been used previously may be used as necessary.

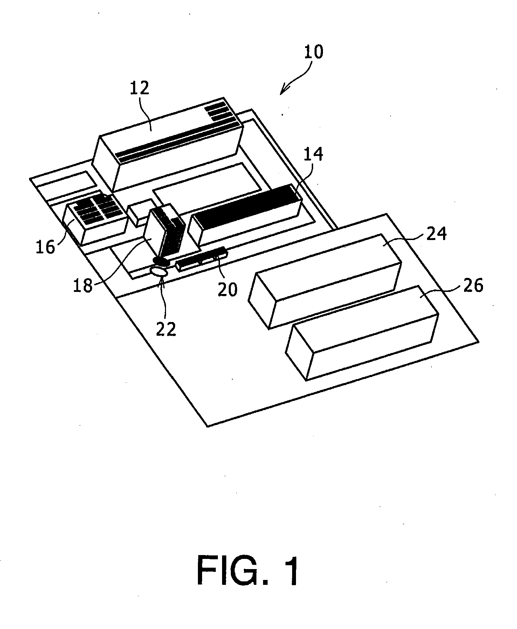

FIG. 1 is a schematic diagram showing a facility group 10 to which a management system 28 is applied. The facility group 10 includes, as facilities, four office buildings including an A building 12, a B building 14, a C building 16, and a D building 18, an electricity storage device building 20 in which a plurality of electricity storage devices are placed, equipment 22 for supplying electricity to a vehicle, and two factory buildings 24 and 26. Although not shown in FIG. 1, the facility group 10 may also include equipment for supplying electricity to a motorcycle battery, a street lamp, an electrical display sign, or the like. Each of the equipment 22 for supplying electricity to the vehicle, the equipment for supplying electricity to the motorcycle battery, the street lamp, and the electrical display sign may be formed to include a photovoltaic module and an electricity storage device.

Each of the four office buildings including the A building 12, the B building 14, the C building 16, and the D building 18, and the equipment 22 for supplying electricity to the vehicle includes a photovoltaic module and an electricity storage device which stores solar light generated power generated by the photovoltaic module. In FIG. 1, black, belt-shaped structures shown on the roofs of the buildings and on an outer wall of the D building 18 represent the photovoltaic modules. In the A building 12, B building 14, and C building 16, shops, kitchens, or the like are located. In the D building 18, DC power lines for using office devices are placed. The photovoltaic module may also be provided on the electricity storage device building 20, but in this description, it is assumed that the photovoltaic module is not provided. Similarly, the photovoltaic module may be provided on the factory buildings 24 and 26, but in this description, it is assumed that the photovoltaic module is not provided. The above-described configuration is merely exemplary for the purpose of explanation, and other configurations may be employed with regard to the placement of the photovoltaic modules, buildings in which the shops and kitchens are located, placement of DC power lines, etc.

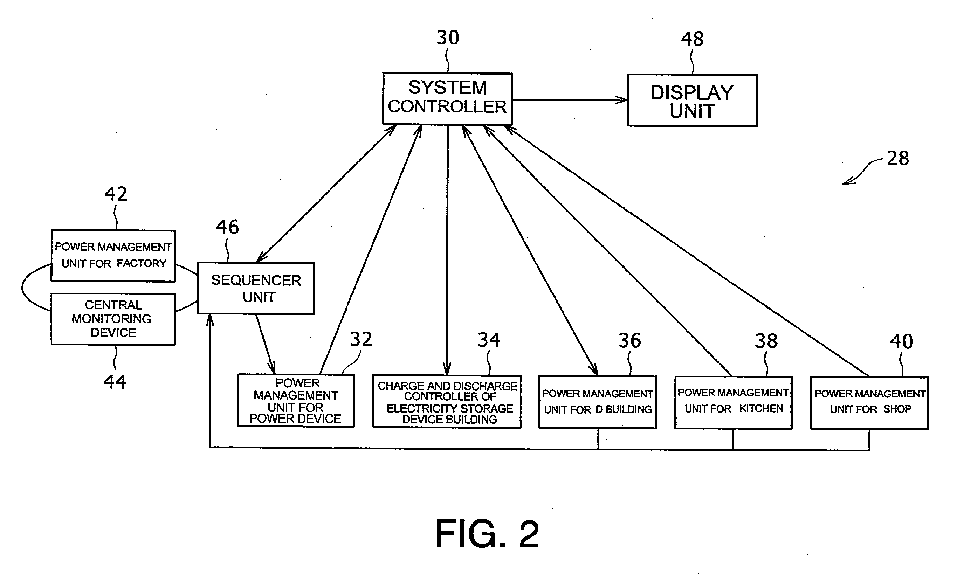

FIG. 2 is a diagram showing flows of power information, an instruction, or the like in the management system 28 which manages power of the facility group 10. Directions of the flows of the power information, the instruction, etc. are shown with arrows.

As shown in FIG. 2, the management system 28 comprises a plurality of power management units, and a system controller 30 which executes overall power management of the facility group 10. The facility group 10 is divided into a plurality of management areas, and different power management units manage power information for different management areas. The system controller 30 is connected to the power management unit by a communication element. FIG. 2 shows, as the plurality of power management units, a power management unit 32 for a power device, a power management unit 36 for the D building, a power management unit 38 for a kitchen, a power management unit 40 for a shop, and a power management unit 42 for the factory. In FIG. 2, a power management unit for the A building 12, a power management unit for the B building 14, and a power management unit for the C building 16 are not shown. Each power management unit is preferably provided so as to not overlap with the management areas of the other power management units, and alternatively, power management units other than those described above may be provided.

The power management unit 32 for the power device has functions to execute management of power information related to the plurality of electricity storage devices distributively placed in the facility group 10, and management of power information related to the photovoltaic modules which are similarly distributively placed, and to transmit the power information to the system controller 30. The electricity storage device and the photovoltaic modules are both power-related devices, and, thus, the power management unit 32 for the power device has a function to manage power information related to the power-related devices.

The power management unit 32 for the power device manages the power information related to the generated power or the like of the photovoltaic module included in the facility group 10 and power information related to charged power, discharged power, a voltage, a current, or the like of the electricity storage device, or the like of the electricity storage device included in the facility group 10. The power information related to the electricity storage device preferably additionally includes information related to a temperature of the electricity storage device. The power information managed by the power management unit 32 for the power device is transmitted to the system controller 30.

The electricity storage device of the electricity storage device building 20 is charged by a power of an external commercial power supply and discharges power which is needed by a load of the facility group 10. Therefore, electricity storage devices in the number to enable securing of a sufficient electricity storage capacity are collectively placed in the electricity storage device building 20. As described, the power information management of the electricity storage device building 20 is important in order to manage the overall power of the facility group 10, and, therefore, of the power management unit 32 for the power device, a portion which manages the power information of the electricity storage device building 20 is in particular referred to as a power management unit for the electricity storage device building.

A charge and discharge controller 34 for the electricity storage device building has a function to control charging and discharging of the plurality of the electricity storage devices in the electricity storage device building 20. The charge and discharge control of the electricity storage devices by the charge and discharge controller 34 for the electricity storage device building is executed by a charge and discharge instruction transmitted from the system controller 30.

The power management unit 36 for the D building has a function to manage the power information in the D building 18. The D building 18 includes, as loads, air-conditioning, lighting, office devices, etc. The power information of these loads, such as the power consumption, is transmitted to the system controller 30. Compared to the other office buildings, the D building 18 is assumed to have a larger power consumption of the load. Thus, when the power for the entirety of the loads of the facility group 10 becomes insufficient, an energy saving control instruction is transmitted from the system controller 30 to the power management unit 36 for the D building. FIG. 2 shows a bidirectional arrow for the flow of the information in order to show two directions, for the flow of the power information and for the flow of the energy saving control instruction.

The power management unit 38 for the kitchen has a function to manage the power information in the kitchen located in the office building. The power information of power consumption or the like of kitchen equipment such as cooking devices is transmitted to the system controller 30.

The power management unit 40 for the shop has a function to manage the power information in the shop located in the office building. Power information of the power consumption or the like of air-conditioning and shop devices such as cooling and freezing showcases is transmitted to the system controller 30.

The power management unit 42 for the factory has a function to manage the power information in the factory buildings 24 and 26. The power information such as the power consumption or the like of the factory devices such as a machine tool and an assembling machine placed in the factory buildings 24 and 26 is transmitted to the system controller 30.

A central monitoring device 44 is a device which monitors presence or absence of occurrence of abnormality, such as failure in power status of the factory buildings 24 and 26. The monitored result is transmitted to the system controller 30.

The contents of the power information or the like of the power management unit 32 for the power device affect the operation state of the factory buildings 24 and 26. Therefore, when the power information transmitted from the power management unit 32 for the power device includes failure information, alert information is transmitted from the system controller 30 to the power management unit 42 for the factory and the central monitoring device 44. The failure information in the power management unit 32 for the power device is, for example, information related to a state of a storage battery in the electricity storage device building 20. For example, the power information from the power management unit 32 for the power device includes the failure information when the storage battery is in a state of excessive charging or excessive discharging.

A sequencer unit 46 is a PLC (Programmable Logic Controller) connected to each of the photovoltaic modules and power converters distributively provided in the power management unit 42 for the factory, the central monitoring device 44, or the like. Each of the power converters is a DC/AC converter or the like which converts direct current of the photovoltaic module into alternating current. Transmission and reception of information among the power management unit 42 for the factory, the central monitoring device 44, and the system controller 40 are achieved through a communication line via the sequencer unit 46. The power information of the photovoltaic module and the power converter is transmitted to the power management unit for the power device through a communication line via the sequencer unit 46. Therefore, when the power information includes the failure information, the failure information is also transmitted to the power management unit 32 for the power device.

When failure occurs in the power management unit 36 for the D building, the power management unit 38 for the kitchen, and the power management unit 40 for the shop, the failure information is transmitted to the system controller 30 and the sequencer unit 46. The failure information from the power management unit 36 for the D building, the power management unit 38 for the kitchen, and the power management unit 40 for the shop may include not only the information related to the electricity storage devices provided in these facilities, but also information related to defects in operations of the other devices provided in these facilities.

When the failure information is received, the system controller 30 outputs an alert signal to the power management unit 42 for the factory and the central monitoring unit 44 by means of an alert signal outputting unit. The failure information of the power management unit 36 for the D building, the power management unit 38 for the kitchen, and the power management unit 40 for the shop are transmitted via the sequencer unit 46 to the power management unit 42 for the factory and the central monitoring device 44. Therefore, the failure information of the power management unit 36 for the D building, the power management unit 38 for the kitchen, and the power management unit 40 for the shop are transmitted to the power management unit 42 for the factory through two different information transmission routes. A reason for transmitting the failure information to the power management unit 42 for the factory and the central monitoring device 44 is that these devices are considered to be pieces of equipment that are directly or indirectly managed by human hands.

The system controller 30 periodically receives and acquires the power information transmitted from the power management unit 32 for the power device, the power management unit 36 for the D building, the power management unit 38 for the kitchen, the power management unit 40 for the shop, and the power management unit 42 for the factory. The system controller 30 creates overall power information of the facility group 10 based on the acquired power information. In addition, the system controller 30 has functions to create a charge and discharge instruction for the charge and discharge controller 34 in the electricity storage device building based on the overall power information of the facility group 10, and to transmit the instruction to the charge and discharge controller 34 in the electricity storage device building.

The system controller 30 also monitors for communication abnormalities among the power management unit 32 for the power device, the charge and discharge controller 34 in the electricity storage device building, the power management unit 36 for the D building, the power management unit 38 for the kitchen, the power management unit 40 for the shop, and the sequencer unit 46, which are connected by the communication lines. The system controller 30 has an abnormality signal outputting unit which outputs an abnormality signal when a communication abnormality occurs. The system controller 30 also has a function to notify an abnormality signal related to the communication abnormality to the power management unit 42 for the factory and the central monitoring device 44. The system controller 40 further has a function to transmit the energy saving control instruction for the power management unit 36 for the D building.

The system controller 30 has a function to create, based on the overall power information of the facility group 10, data of the power consumption of the facility group 10, the supplied power from the external commercial power supply, the generated power of the photovoltaic module, and the charge and discharge power in the electricity storage device in the electricity storage device building 20. The system controller 30 additionally has functions to output an alert signal assuming a failure has occurred when the power information includes the failure information, and to output an abnormality signal indicating a communication abnormality when an abnormality has occurred in the transmission route of the power information.

In order to accurately detect that the power information includes the failure information, the power information must be the most recent information of the information that changes with time. If abnormality occurs in the transmission route of the power information, the power information would not be updated from the old power information, and, consequently, the failure information could not be accurately detected and the alert signal could not be accurately output. Therefore, the existence/absence of the communication abnormality is judged according to a predefined communication abnormality judgment standard. The communication abnormality judgment standard can be standardized by existence/absence of the update of the power information.

For a specific method of judgment of the existence/absence of the communication abnormality, a method may be considered in which time information related to the time which is periodically updated is included in the power information transmitted from each of the power management units, and the updated time information related to the time is used. For this purpose, each power management unit is provided with an updating unit which attaches time information related to the update time when the power information is updated, and updates the power information at a periodical update interval which is defined in advance. The system controller 30 comprises a receiving unit which periodically receives the power information from each power management unit, an update monitoring unit which monitors an update state of the time information included in the received power information, and a communication judging unit which judges a communication status with the power management unit based on the update state of the received power information.

When each power management unit attaches the time information related to the update time when the power information is updated, even if the content itself of the power information which is updated and transmitted is the same content as that from the previous updating process, the time information related to the update time is updated. The information related to the time of update is the update time. Therefore, if the time of update received by the system controller 30 is more recent than the previous update time, no communication failure has occurred. Therefore, when the time information is not updated, for the update state of the time information included in the power information transmitted from a certain power management unit, for a time period exceeding a predefined confirmation interval, it is possible to judge that abnormality has occurred in the communication between this power management unit and the system controller 30. The confirmation interval is preferably set to 2 - 3 times the time period between a new update and the previous update of the power information.

The system controller 30 also judges whether or not the power information includes failure information. The failure information includes the alert information transmitted when each power management units judges that failure has occurred, and information where the power management units did not judge that failure has occurred but the system controller 30 has judged that failure has occurred. In order to judge the presence/absence of the occurrence of failure in the system controller 30, a failure occurrence judgment standard may be predefined in the system controller 30, and the system controller 30 can determine the occurrence of the failure by referencing the power information received from each power management unit against the failure occurrence judgment standard. In this manner, by executing the judgment of the presence/absence of the occurrence of failure in a plurality of stages, a further degree of safety can be secured for the system as a whole.

Even if failure information is detected in the state where the communication abnormality has occurred, the failure information may be old information, and accuracy of the failure information may be questionable. Thus, it is also possible to judge whether or not the power information includes the failure information only for the power information received by the system controller 30 in a state where there is no communication abnormality.

The system controller 30 transmits an abnormality signal and an alert signal also to a display unit 48. The abnormality signal and the alert signal transmitted to the display unit 48 may have contents to briefly convey the occurrence such as "communication abnormality has occurred" or "failure has occurred." These signals thus may have simple contents with a relatively small amount of information, targeted to immediately notify the occurrence of the failure.

The display unit 48 is a display which displays an overall power management state of the facility group grasped by the system controller 30. The power management state includes, in addition to the data of the power consumption, self-supplied power, saved amount of energy, CO₂ reduction amount, etc., presence/absence of communication abnormality, and presence/absence of failure occurrence.

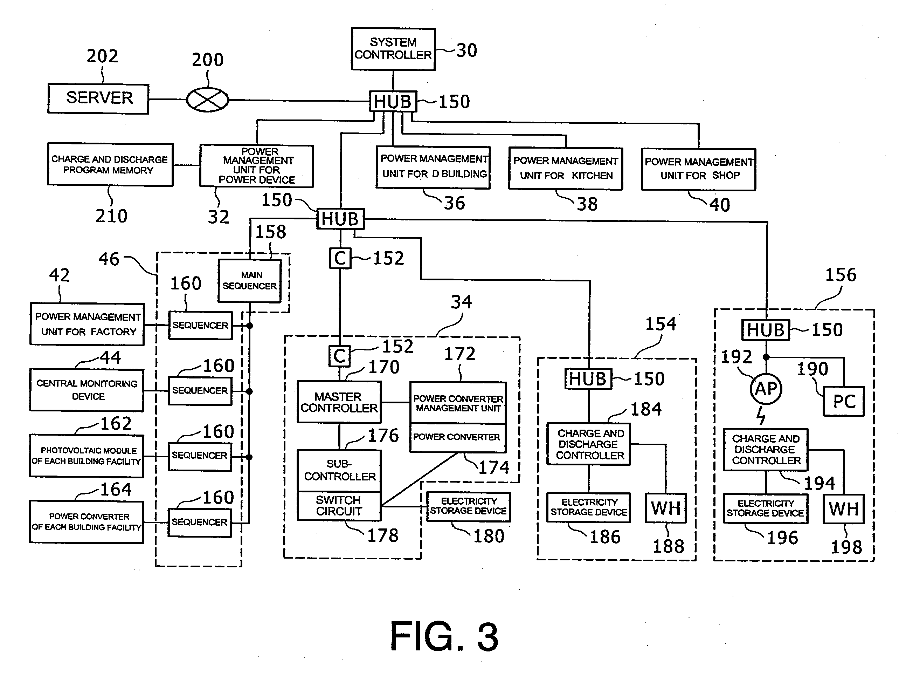

Next, details of a communication system will be described with reference to FIG. 3. FIG. 3 shows a communication system among the system controller 30, the power management unit 32 for the power device, the charge and discharge controller 34 in the electricity storage device building, the power management unit 36 for the D building, the power management unit 38 for the kitchen, the power management unit 40 for the shop, and the sequencer unit 46, and a communication system among a piece of equipment 154 for supplying electricity to a motorcycle battery, and a street lamp 156 which are not shown in FIGs. 1 and 2, and the system controller 30.

The system controller 30, the power management unit 32 for the power device, the power management unit 36 for the D building, the power management unit 38 for the kitchen, and the power management unit 40 for the shop are connected by a LAN (Local Area Network) via a hub (HUB) 150.

The power management unit 32 for the power device manages power information of an electricity storage device 180 located in the electricity storage device building 20, a photovoltaic module 162 in each building, and electricity storage devices placed corresponding to the photovoltaic modules, and, thus, is connected to these buildings by a communication system.

The power management unit 32 for the power device is connected to a charge and discharge program memory 210. The charge and discharge program memory 210 is a memory device which stores a charge and discharge control program for controlling an amount of charge of the electricity storage device in the electricity storage device building 20 and the charging and discharging of the electricity storage device for the photovoltaic module distributively placed in the facility group 10. The charge and discharge controller of each electricity storage device downloads and uses a predetermined control program from the charge and discharge program memory 210 via the power management unit 32 for the power device. Each charge and discharge controller inquires the power management unit 32 for the power device for an updating status of the control program at a predefined inquiry interval, and, when there is an updated version of the control program, the charge and discharge controller downloads the updated version and replaces the old version. In order to judge whether or not the control program has been updated, it is preferable to attach an update history to the control program and store the update history along with the updated control program in the charge and discharge program memory 210.

The charge and discharge program memory 210 may be provided as an internal memory of the management system 28 or may be provided as an external memory of the management system 28. In addition, by storing the control programs of the plurality of the charge and discharge controllers in the charge and discharge program memory 210, the control programs of the plurality of charge and discharge controllers may be managed collectively. Specifically, because the contents of the controls in the plurality of charge and discharge controllers can be managed collectively, cooperation can be achieved in control by the plurality of power management units.

The system controller 30 and the sequencer unit 46 are connected by a LAN via two hubs 150. The sequencer unit 4 6, the power management unit 42 for the factory, the central monitoring device 44, the photovoltaic module 162 of each building, and a power converter 164 of each building can be connected by suitable communication lines.

The system controller 30, the power management unit 32 for the power device, and the charge and discharge controller 34 of the electricity storage device building are connected by a LAN to the second hub 150, and are connected from the second hub with an optical cable via a hub 152 with an optical terminal station. The element referred to by "C" in FIG. 3 represents the hub 152 with an optical terminal station.

The charge and discharge controller 34 of the electricity storage device building comprises a master controller 170, a power converter management unit 172, a power converter 174, a switch circuit 178, and a sub-controller 176. The master controller 170 receives the charge and discharge instruction transmitted from the system controller 30. The power converter management unit 172 manages the power converter 174. The switch circuit 178 is provided between the electricity storage device 180 and the power converter 174. The sub-controller 176 controls an operation of the switch circuit 178, acquires electricity storage device information which is the power information related to the electricity storage device 180, and transmits the electricity storage device information to the power management unit 32 for the power device.

The system controller 30, the power management unit 32 for the power device, and the equipment 154 for supplying electricity to the motorcycle battery are connected by a LAN via three hubs 150. The equipment for supplying electricity to the motorcycle battery comprises a photovoltaic module (not shown in FIG. 3), an electricity storage device 186 which stores the power generated by the photovoltaic module, a power detecting unit (WH) 188, and a charge and discharge controller 184.

The system controller 30, the power management unit 32 for the power device, and the street lamp 156 are connected by the LAN via three hubs 150. The street lamp 156 comprises a photovoltaic module (not shown in FIG. 3) an electricity storage device 196 which stores the power generated by the photovoltaic module, a power detecting unit (WH) 198, and a charge and discharge controller 194.

The street lamp 156 differs from the equipment 154 for supplying electricity to the motorcycle battery in that the hub 150 included in the street lamp 156 and the charge and discharge controller 194 are not connected by the LAN, but rather, an access point (AP) 192 and the charge and discharge controller 194 are connected by exchange of wireless communication. In the street lamp 156, the wireless communication exchange is controlled by a personal computer (PC) 190. Specifically, the system controller 30, the power management unit 32 for the power device, and the personal computer 190 are connected by the LAN, and the access point 192 and the charge and discharge controller 194 are connected by control of the personal computer 190. Therefore, for example, the control program read from the charge and discharge program memory 210 is first downloaded to the personal computer 190, and then, necessary update may be applied to the charge and discharge controller 194.

In this manner, while the charge and discharge controller 184 of the equipment 154 for supplying electricity to the motorcycle battery is directly connected to the power management unit 32 for the power device by the LAN, the charge and discharge controller 194 of the street lamp 156 is connected indirectly to the power management unit 32 for the power device via the personal computer 190. By distinguishingly using the direct connection form and the indirect connection form and distinguishingly using the communication via the LAN and the optical communication, it is possible to transmit and receive data contents and data amounts of the power information, the instruction, etc. corresponding to the target of the charge and discharge control.

The system controller 30 is connected to a server 202 via the hub 150 and a public line network 200. When the alert signal is output from the system controller 30, the server 202 transmits the details of the failure information included in the power information transmitted from the power management unit 32 for the power device to the power management unit 42 for the factory, by means of a public mail communication line. This is because the alert signal which is output by the system controller 30 has a content with a relatively small amount of information targeted to immediately and simply notify the occurrence of the failure, and, thus, the small amount of information is supplemented by transmitting data of the detailed contents through another communication system.

More specifically, when the system controller 30 outputs the alert signal, a transmission instruction unit of the failure information of the system controller 30 sends an instruction to the power management unit 32 for the power device, to cause the server 202 to transmit the details of the failure information. The server 202 is a server in which the devices which can access the server 202 are predefined. The devices which can access the server 202 may be the power management units, including the power management unit 42 for the factory.

The public mail communication line is used when the data are exchanged with the server 202 because, with such a configuration, a dedicated communication line does not need to be provided when the server 202 is to be provided in a remote location. In addition, when the monitoring unit related to the facility group 10 is to be provided at a remote location, the monitoring unit also preferably is able to access the server 202, and, thus, the public mail communication line may be used in this case also.

Because the server 202 can be accessed from each power management unit, the power management units can actively access the server 202 and acquire the detailed information stored in the server 202. Therefore, when the detailed information is unnecessary information for the power management unit, the power management unit does not need to download the unnecessary detailed information having a large amount of data.

As the server 202, the use of a mail server is preferable. Because the mail server is originally provided for transmitting and receiving electronic mails, the communication environment is superior, and countermeasures for disaster are taken as a part of the equipment infrastructure. In addition, a communication indicating that the detailed information has been acquired may be transmitted by the mail server through the electronic mail or the like to each power management unit.

Using the above-described communication systems, the alert signal which is output from the system controller 30 is transmitted to the sequencer unit 46 via two hubs 150, and is transmitted from the sequencer unit 46 to the power management unit 42 for the factory and the central monitoring device 44. In addition, the failure information is transmitted from the power management unit 36 for the D building, the power management unit 38 for the kitchen, and the power management unit 40 for the shop to the sequencer unit 46 via the LAN.

The transmission of the data from the system controller 30 to the display unit 48 shown in FIG. 2 is achieved by the LAN.

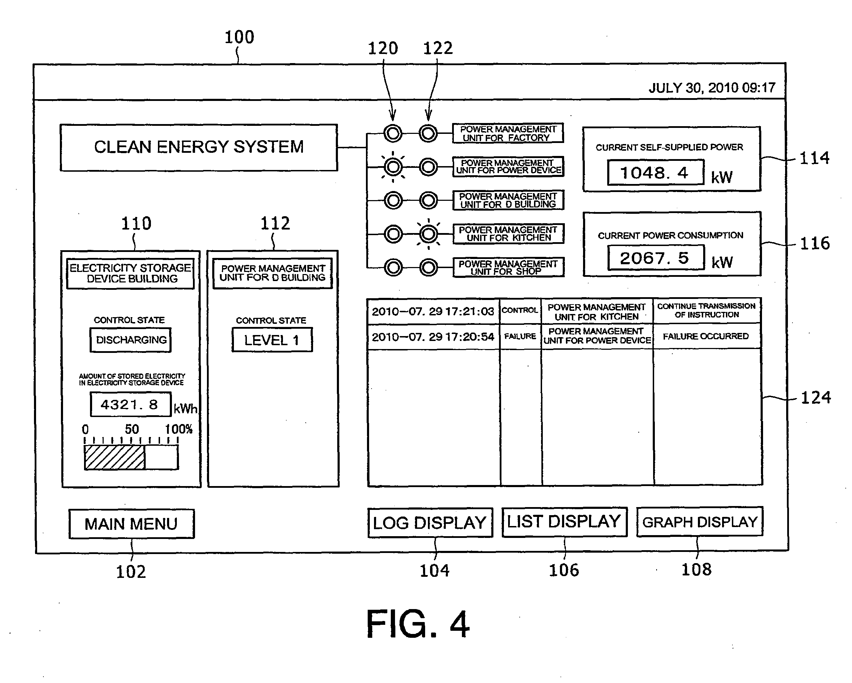

FIG. 4 is a diagram showing a display screen 100 of the display unit 48 which displays an action of the system controller 30. The display unit 48 can be provided at a location near the system controller 30 and can be viewed by a human operator. In FIG. 4, a status of a clean energy system of the facility group 10 is shown on the display screen 100. At a lower side of the display screen 100, selection buttons for a main menu 102, a log display 104, a list display 106, and a graph display 108 are shown.

A first display item 110 is a portion where a status of the electricity storage device building 20 is displayed. FIG. 4 shows that a control state of the electricity storage device is "discharging," and that an amount of stored electricity of the electricity storage device is 4321.8 kWh, which is about 60% of the rated capacity. A second display item 112 is a portion where a status of control by the power management unit 36 for the D building is displayed. FIG. 4 shows "level 1," which may be defined, for example, to correspond to a control under the energy saving control instruction.

A third display item 114 and a fourth display item 116 are portions where a current self-supplied power and a current power consumption are displayed. In FIG. 4, the third display item 114 shows that the self-supplied power which is the power generated by the solar light is 1048.4 kW and the fourth display item 116 shows that the power consumption is 2067.5 kW. Alternatively, the self-supplied power value shown in the third display item 114 may be displayed in a converted amount corresponding to the CO₂ reduction.

A first lamp group 120 and a second lamp group 122 are portions where the status of each power management unit is displayed. The first lamp group 120 includes lamps which are switched on when there is a failure. The second lamp group 122 includes lamps which are switched on during communication abnormality. In FIG. 4, a lamp corresponding to the power management unit 32 for the power device, among the first lamp group 120, is switched on, indicating that failure is occurring in the power management unit 32 for the power device. In addition, a lamp corresponding to the power management unit 38 for the kitchen, among the second lamp group 122, is switched on, indicating that there is a communication abnormality with the power management unit 38 for the kitchen. A fifth display item 124 is a portion where a detailed status of the failure state and the communication abnormality displayed by the first lamp group 120 and the second lamp group 122 is displayed. With this display, it is possible to know, at a glance, the time, kind, and location of the failure or the abnormality and the current status thereof.

### [Industrial Applicability]

The management system according to the present invention can be used for power management of a facility which consumes power.

### [Explanation of Reference Numerals]

10 FACILITY GROUP; 12 A BUILDING; 14 B BUILDING; 16 C BUILDING; 18 D BUILDING; 20 ELECTRICITY STORAGE DEVICE BUILDING; 22 EQUIPMENT FOR SUPPLYING ELECTRICITY TO VEHICLE; 24, 26 FACTORY BUILDING; 28 MANAGEMENT SYSTEM; 30 SYSTEM CONTROLLER; 32 POWER MANAGEMENT UNIT FOR POWER DEVICE; 34 CHARGE AND DISCHARGE CONTROLLER OF ELECTRICITY STORAGE DEVICE BUILDING; 36 POWER MANAGEMENT UNIT FOR D BUILDING; 38 POWER MANAGEMENT UNIT FOR KITCHEN; 40 POWER MANAGEMENT UNIT FOR SHOP; 42 POWER MANAGEMENT UNIT FOR FACTORY; 44 CENTRAL MONITORING DEVICE; 46 SEQUENCER UNIT; 48 DISPLAY UNIT; 100 DISPLAY SCREEN; 102 MAIN MENU; 104 LOG DISPLAY; 106 LIST DISPLAY; 108 GRAPH DISPLAY; 110 FIRST DISPLAY ITEM; 112 SECOND DISPLAY ITEM; 114 THIRD DISPLAY ITEM; 116 FOURTH DISPLAY ITEM; 118 FIFTH DISPLAY ITEM; 120 FIRST LAMP GROUP; 122; SECOND LAMP GROUP; 150 HUB; 152 HUB WITH OPTICAL TERMINAL STATION; 154 EQUIPMENT FOR SUPPLYING ELECTRICITY TO MOTORCYCLE BATTERY; 156 STREET LAMP; 162 PHOTOVOLTAIC MODULE; 164, 174 POWER CONVERTER; 170 MASTER CONTROLLER; 172 POWER CONVERTER MANAGEMENT UNIT; 176 SUB-CONTROLLER; 178 SWITCH CIRCUIT; 180, 186, 196 ELECTRICITY STORAGE DEVICE; 184, 194 CHARGE AND DISCHARGE CONTROLLER; 188, 198 POWER DETECTING UNIT; 190 PERSONAL COMPUTER; 192 ACCESS POINT; 200 PUBLIC LINE NETWORK; 202 SERVER; 210 CHARGE AND DISCHARGE PROGRAM MEMORY

## Claims

1. A management system comprising:
a plurality of power management units which divide power information of a facility group including a plurality of facilities into a plurality of management areas and manage the management areas; and
a system controller which is connected to the plurality of power management units by a communication element, which acquires the power information for each of the management areas, and which manages overall power information of the facility group based on the acquired power information, wherein
the system controller comprises:
an abnormality signal outputting unit which outputs an abnormality signal when it is judged that communication with the power management unit is abnormal according to a predetermined communication abnormality judgment standard with regard to the power information; and
an alert signal outputting unit which outputs an alert signal when the power information includes failure information in the management area of the power management unit.

2. The management system according to Claim 1, wherein
the power management unit comprises
an updating unit which attaches update time when the power information is updated; and
in the communication abnormality judgment standard, the update time of the power information is acquired when the power information is acquired from the power management unit, and the communication with the power management unit is judged as abnormal when the update time is not updated for a period exceeding a predetermined confirmation interval.

3. A system controller which executes power management of a facility group including a plurality of facilities, comprising:
a receiving unit which receives, from a power management unit which manages power information of the facility, the power information which is output from the power management unit;
an update monitoring unit which monitors an update state of the power information received by the receiving unit; and
a communication judging unit which judges a communication status with the power management unit based on the update state of the power information received by the receiving unit, wherein
the communication judging unit judges that the communication status with the power management unit is abnormal when the update monitoring unit confirms that the power information received by the receiving unit is not updated.

4. The system controller according to Claim 3, wherein
the judgment of whether or not the power information includes failure information is executed only when the communication judging unit judges that the communication status with the power management unit is normal.

5. The system controller according to Claim 3, wherein
the power information which is output from the power management unit includes time information related to time,
the update monitoring unit monitors an update state of the time information, and
the communication judging unit judges that the communication status with the power management unit is abnormal when the update monitoring unit confirms that the time information is not updated.
